# EUROPEAN PATENT SPECIFICATION

(11) **EP 3 108 162 B1**
(45) Date of publication and mention of the grant of the patent: **03.06.2020**
(21) Application number: 15752097.4
(22) Date of filing: 28.01.2015
(51) Int. Cl.: F16K 1/30, F17C 13/04, B65D 49/00

(54) **VALVE ARRANGEMENT FOR A NON-REFILLABLE PRESSURE CONTAINER AND A PRESSURE CONTAINER WITH SUCH A VALVE DEVICE**
VENTILANORDNUNG FÜR NICHT NACHFÜLLBAREN DRUCKBEHÄLTER UND DRUCKBEHÄLTER MIT EINER DERARTIGEN VENTILVORRICHTUNG
AGENCEMENT DE SOUPAPE POUR CONTENEUR SOUS PRESSION NON RÉUTILISABLE ET CONTENEUR SOUS PRESSION DOTÉ D'UN TEL DISPOSITIF DE SOUPAPE

(30) Priority: 18.02.2014 SE 1450186
(43) Date of publication of application: 28.12.2016
(73) Proprietor: Sievert AB, 17126 Solna (SE)
(72) Inventor: SOHLIN, Louisa, S-123 43 Farsta (SE)
(74) Representative: Groth & Co. KB
(86) International application number: PCT/SE2015/050082
(87) International publication number: WO 2015/126307

(56) References cited:
- EP-A1- 0 598 640
- EP-A1- 2 253 871
- WO-A2-2012/107715
- DE-C1- 3 311 566
- GB-A- 2 133 502
- SE-B- 468 779
- US-A- 3 704 813
- US-A- 3 704 813
- US-A- 3 756 277
- US-A- 4 813 575
- US-A- 5 036 876
- US-A1- 2013 299 024
- US-B2- 6 595 230

## Description

### Technical Field

The present invention relates to non-refillable pressure vessels having a maximum working pressure of approximately 10-25 bar, preferably for the connection of heating tools.

### Background of the Invention

The pressure vessels used within this pressure interval preferably contain liquefied petroleum gas, LPG, which is delivered in pressure bottles of the disposable type for general use. The field of application of such LPG bottles is to be connected to user devices in the form of heating tools such as, for instance, burners or torches used in different forms of brazing operations.

Previously known disposable LPG bottles having relatively high pressure are shown in the American patent specification US 6,595,230, which shows a valve, which is provided with a non-return valve in the form of a ball, which upon filling of the bottle is situated on one side of a shoulder in the valve, the gas upon filling flowing past the ball and the shoulder via openings therebetween and further into the bottle. When the filling is finished, the ball is pressed past the shoulder and abuts against a seat in the valve so that the ball seals against the seat and in doing so prevents further filling or refilling. This principle of a ball that seals against a seat to eliminate refilling is simple and reliable, but provides a slow filling method by the fact that the shoulder involves a restriction against the ball of the flow of gas in the filling. In addition, the restriction is provided by closing the walls of the valve, which constitutes an uncontrolled method for providing said restriction and for the fluid flow past the restriction upon filling.

The US patent 3,704,813 discloses a valve system for non-refillable containers. This valve system enable one-time-only filling of the container, for avoiding dangerously refilled containers. The valve assembly has a shut-off valve for controlling fluid dispensing. The shut-off valve converts the assembly to its non-fillable condition because of a first closing operation of the shut-off valve. There is indications in the patent that an initially inactive check valve allows the container to be filled and becomes a discharge-only check valve, or a check valve in a dispensing passage having a parallel filling passage that is blocked after one use.

### The Object of the Invention

The object of the invention is to solve said problems by providing a non-refillable pressure container, for instance, an LPG bottle, for user devices provided with an existing standard thread and which pressure container can be filled faster than what previously has been possible.

The object is also to provide such a non-refillable pressure container for the gases propane or butane or the gas mixes propane/butane or propane/butane/propene/acetone for user devices provided with an existing standard thread.

The object of the invention is also to provide a valve device that allows the filling of a pressure container to a pressure of 10-20 bar without the possibility of repeated filling.

### Summary of the Invention

By the present invention, as the same appears in the independent claims, the above-mentioned objects are met, said disadvantages having been eliminated. Suitable embodiments of the invention are defined in the dependent claims.

The invention concerns a valve device to prevent refilling of a pressure container, which valve device comprises a valve housing having a valve chamber provided with two ports. A valve body is placed in the valve chamber and provided with an axially movable and spring-loaded valve cone having a valve seat, which seals against the valve body when the valve cone is unloaded. The valve body limits the valve chamber at one port thereof and further the valve chamber is provided with a non-return valve at the other port thereof, which non-return valve is arranged to sealingly abut against the valve housing at a positive pressure in the valve chamber. The valve housing is provided with a filling channel, which extends from a position between the two ports of the valve chamber through the valve housing and out through the outer surface thereof. Further, an, at least initially, movable interrupt member is connected to the filling channel to close the filling channel after the pressure container has been filled with pressure fluid.

By arranging the valve device with a filling channel being on one hand possible to shut off and on the other hand separated from the valve chamber, a controlled filling process is obtained, which allows faster filling of the pressure container than what previously has been possible to obtain.

According to one embodiment of the invention, the interrupt member is formed as a piston movable in a cylinder, which cylinder forms the angle α with the filling channel, the piston being displaceable to entirely cover the opening of the filling channel toward the cylinder. This embodiment makes it possible to convey the fluid from the valve device to a suitable discharge position in the pressure vessel.

According to one embodiment of the invention, the angle α = 90°.

According to one embodiment of the invention, the cylinder is situated in the valve housing at a distance from the valve chamber. This embodiment makes it possible to manoeuvre the shut off member independently of the rest of the parts included in the valve device.

According to one embodiment of the invention, the valve chamber is at least partly cylindrical and said cylinder is a cylindrical part of the valve chamber. This embodiment allows a more compact design of the valve housing and is accordingly material saving.

According to one embodiment of the invention, the piston is formed as a sleeve. This means that pressure fluid can flow through the piston and implies that the piston can be arranged in the existing valve chamber.

According to one embodiment of the invention, the valve housing is provided with a connection thread for the connection of a user device. Such a thread may either be an external thread or an internal thread. Preferably, the thread is an external thread of standard type, for instance, a so-called Linde thread. Such a connection thread for user devices has the dimension 7/16" UNEF Special with a diameter of 10.6 mm and with a thread profile according to standard EN 521. This particular type of connection thread is very common in said types of user devices and may therefore constitute advantageous embodiments in connection with non-refillable pressure containers according to the present invention.

According to one embodiment of the invention, it comprises a rotationally symmetrical connection collar. This connection collar is preferably of standard type so as to, together with said standard thread, fit already existing user devices to be connected to the pressure container.

According to one embodiment of the invention, the movable interrupt member is irreversibly movable after closure of the filling channel. This may be provided by pressing the interrupt member to its interrupt position. An alternative is to displace the interrupt member to its interrupt position by screwing it using a special toolwhich makes impossible reversed displacement by a user. By a special tool, it would be possible for an authorized filler to refill the pressure container even if this is not the object of the invention. A further alternative is to allow the interrupt member become glued on in its cylinder in its interrupt position.

The invention further concerns a pressure container comprising a pressure vessel, which can be filled with a gaseous fluid and which is provided with a valve device according to any one of the above-mentioned embodiments.

According to one embodiment of the invention, the pressure container comprises a safety valve.

According to one embodiment of the invention, the safety valve is placed in the pressure vessel beside the valve device.

### Brief Description of the Drawings

Now, the invention will be described in more detail, reference being made in connection with the accompanying drawing figures.
- Figure 1: shows a pressure container according to a first embodiment of the invention.
- Figure 2: shows a top view of the pressure container according to Figure 1.
- Figure 3: shows a part of a section view A-A according to Figure 2.
- Figure 4: shows in an enlargement a section through a valve device according to Figure 3.
- Figure 5: shows a pressure container according to a second embodiment of the invention.
- Figure 6: shows a top view of the pressure container according to Figure 5.
- Figure 7: shows a part of a section view A-A according to Figure 6.
- Figure 8: shows in an enlargement a section through a valve device according to Figure 7.

### Description of the Invention

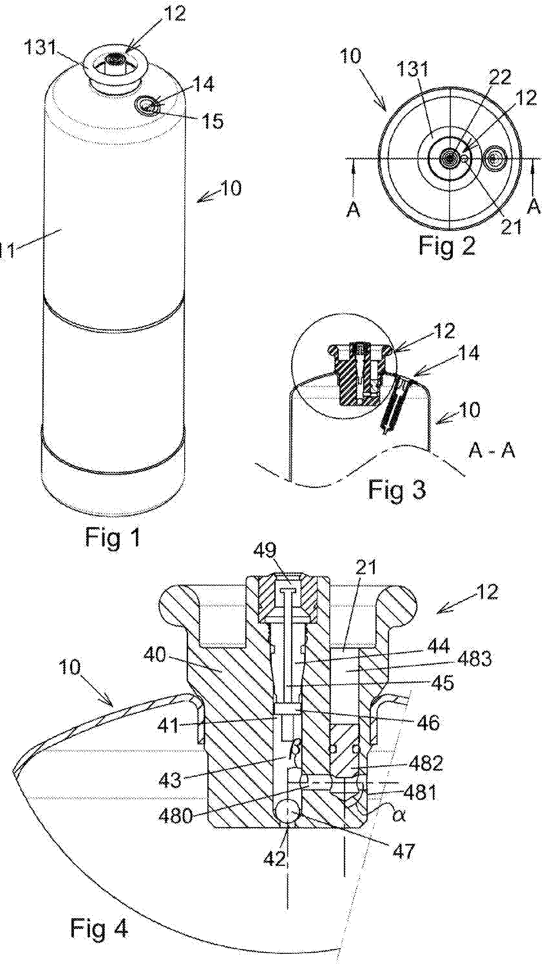

Figure 1 shows a pressure container 10 comprising a pressure vessel 11 provided with a valve device 12 according to a first embodiment of the invention having a first valve collar 131. The valve device is connected to the pressure vessel, which also comprises a pressure relief valve 14 fitted in a second valve collar 15. The valve device 12 is provided with a standard thread of so-called Linde type, i.e., a 7/16" UNEF Special thread applied on a connection tap where the thread has a diameter of 10.6 mm. The thread profile is according to standard EN 521. Thus, the invention is applicable to any gas driven user equipment that can be connected to such a thread.

Figure 2 shows the embodiment of Figure 1 wherein the valve device 12 of the pressure container 10 is connected with the first valve collar 131 centrally to the top of the pressure container. The figure also shows that the valve device 12 is provided with a piston channel 21, which extends into the valve device 12 beside and parallel to a centrally situated valve chamber 22.

Figure 3 shows an axial section A-A according to Figure 2 through the upper part of the pressure container 10. Here, the valve device 12 is shown fitted in the pressure container together with the pressure relief valve 14.

Figure 4 shows in enlargement the valve device 12 permanently attached to the pressure container 10. The valve device comprises a valve housing 40 having a valve chamber 43 provided with two ports, a first port 41 and a second port 42. In the valve chamber 43, there is fitted a valve body 44 having an axially movable valve cone 45 spring-loaded for closure. The valve cone 45 is provided with a valve seat 46, which seals against the valve body 44 when the valve cone 45 is unloaded from externally connected consumers. The valve body 44 limits the valve chamber 43 at the first port 41 thereof, but allows fluid flow through the valve body when the valve cone 45 has been pushed down against the action of a spring, not shown. The valve chamber 43 is provided with a non-return valve 47, in the form of a spherically shaped rubber ball, at the other port 42 thereof, which non-return valve 47 is arranged to sealingly abut against the valve housing 40 at a positive pressure in the valve chamber 43, i.e., at a pressure exceeding the static pressure that on the occasion prevails in the pressure container 10. The valve housing 40 is provided with a filling channel 480, which extends from the valve chamber 43 where one of the openings of the filling channel 480 is situated in the valve chamber 43 between the two ports 41, 42 through the valve housing 40 and out through the outer surface 481 thereof. The filling channel 480 interacts with an, at least initially, movable interrupt member, in the form of a piston 482, which is arranged to close the filling channel 480. The piston channel 21 shown in Figure 2 forms a cylinder 483 in which the piston 482 is movable, at least initially. The cylinder 483 is running parallel to the valve chamber 43 in the valve housing 40, which valve chamber in its lower part also is cylindrical. With cylindrical, reference is here made to generally circular-cylindrical.

The function of the valve device 12 upon filling of the pressure container 10 is that a filling device, not shown, is connected to the valve device 12, the valve cone being displaced downward in the figure, the valve seat 46 opening for fluid passage from a valve inlet 49 to the valve chamber 43. When fluid is pressed into the valve chamber 43, the pressure in the valve chamber will be higher than in the pressure container, the non-return valve 47 closing and fluid passage through the second port 42 being blocked. The fluid supply to the pressure container will instead take place through the filling channel 480, which is entirely open according to the position shown in the figure. When the filling is finished and the desired fluid pressure has been attained in the pressure container 10, the piston 482 will be brought to a position where it entirely covers the filling channel 480, the filling channel being shut off. The manoeuvring of the piston 482 may be carried out either before or after the filling device has been removed from the valve device 12. When the filling device is removed from the valve device 12, the valve seat 46 will close the fluid passage through the valve body 44. At this stage, the pressure container is ready to be used, a user device, not shown, being connected to the valve device 12, the fluid passage through the valve body 44 being opened. The pressure in the pressure container 10 is now greater than the ambient pressure, the non-return valve 47 opening and fluid reaching the connected user device. When the pressure container has been emptied of fluid, new fluid cannot be refilled as long as the piston 482 closes the filling channel 480. Thus, the pressure container cannot be refilled.

The manoeuvring of the piston 482 may be arranged in several ways, but according to the embodiment in the shown figure, the piston is screwed into its arresting position. In this arresting position, an end user cannot refill the pressure container. However, it could be possible that authorized fillers using special tools can move the piston and in that connection open the filling channel so that refilling can take place.

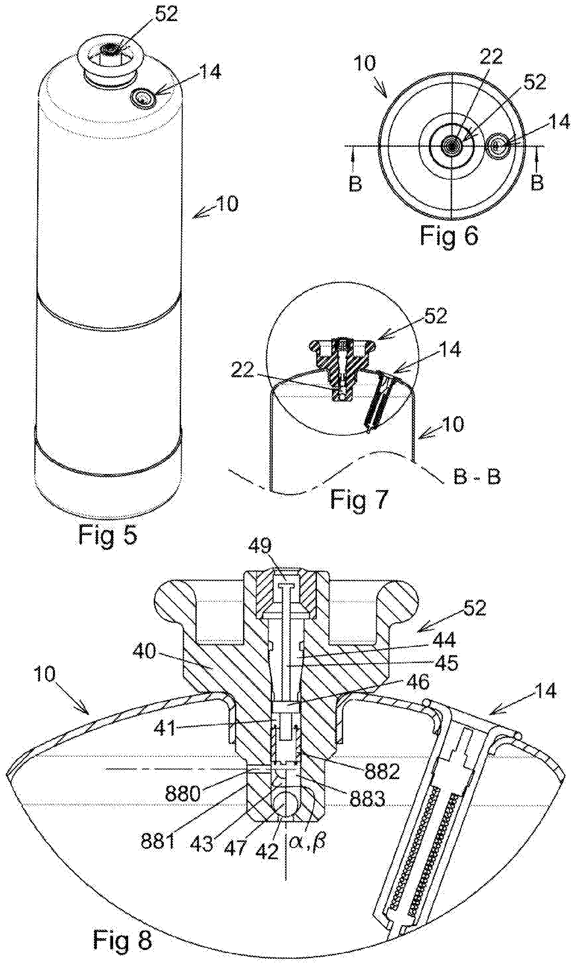

Figure 5 shows a similar pressure container 10 as has been shown in Figure 1 but with the difference that the pressure container 10 is provided with a valve device 52 according to a second embodiment of the invention. Thus, also this pressure container is provided with a pressure relief valve 14, which is placed beside the valve device 52.

Figure 6 shows a top view of the pressure container 10 in Figure 1 wherein the valve device 52 is centrally placed and provided with a centrally situated valve chamber 22 and wherein the pressure relief valve 14 is placed beside the valve device 52 in the pressure container.

Figure 7 shows an axial section B-B according to Figure 6 through the upper part of the pressure container 10. Here, the valve device 52 is shown fitted in the pressure container together with the pressure relief valve 14. The figure also indicates the valve chamber 22 in the valve device 52.

Figure 8 shows in enlargement the valve device 52 permanently attached to the pressure container 10. The valve device comprises a valve housing 40 having a valve chamber 43 provided with two ports, a first port 41 and a second port 42. In the valve chamber 43, there is fitted a valve body 44 having an axially movable valve cone 45 spring-loaded for closure. The valve cone 45 is provided with a valve seat 46, which seals against the valve body 44 when the valve cone 45 is unloaded from externally connected consumers. The valve body 44 limits the valve chamber 43 at the first port 41 thereof, but allows fluid flow through the valve body when the valve cone 45 has been pushed down against the action of a spring, not shown. The valve chamber 43 is provided with a non-return valve 47, in the form of a spherically shaped rubber ball, at the other port 42 thereof, which non-return valve 47 is arranged to sealingly abut against the valve housing 40 at a positive pressure in the valve chamber 43, i.e., at a pressure exceeding the static pressure that on the occasion prevails in the pressure container 10. The valve housing 40 is provided with a filling channel 880, which extends from the valve chamber 43, where one of the openings of the filling channel 880 is situated in the valve chamber 43 between the two ports 41, 42, through the valve housing 40 and out through the outer surface 881 thereof. The filling channel 880 interacts with an, at least initially, movable interrupt member, in the form of a piston 882, which is arranged to close the filling channel 880. In this second embodiment, the piston is formed as a sleeve, which centrally lets fluid through for the filling of the pressure container. Also in this embodiment, the piston 882 is running in a cylinder 883 but this cylinder coincides with the valve chamber 43, which then is cylindrically shaped. In this embodiment, the cylinder 883 is usually circular-cylindrically shaped. Upon filling of the pressure container 10, the piston 882 is situated above the mouth of the filling channel 880 in the valve chamber 43. The piston 882 is provided with axially directed protuberances, which aim at obtaining a distance on one hand between the valve seat 46 and the piston 882 upon filling and on the other hand between the non-return valve 47 and the piston 882 in use by a consumer connected to the pressure container.

The function of the valve device 52 upon filling of the pressure container 10 is that a filling device, not shown, is connected to the valve device 52, the valve cone being displaced downward in the figure, the valve seat 46 opening for fluid passage from a valve inlet 49 via the valve seat 46 and through the piston 882 to the valve chamber 43. When fluid is pressed into the valve chamber 43, the pressure in the valve chamber will be higher than in the pressure container, the non-return valve 47 closing and fluid passage through the second port 42 being blocked. The fluid supply to the pressure container will instead take place through the filling channel 880, which is entirely open according to the position shown in the figure. When the filling is finished and the desired fluid pressure has been attained in the pressure container 10, the piston 882 will be brought to a position where it entirely covers the filling channel 880, the filling channel being closed. Also in this embodiment, the manoeuvring of the piston 882 may be carried out either before or after the filling device has been removed from the valve device 52, however it is preferable that the displacement of the piston 882 is made before the removal of the filling device since the displacement is made by means of the valve seat pressing the piston downward in the cylinder 883, which implies that fluid passage is opened through the valve body 44 and out through the valve inlet 49. When the filling device is removed from the valve device 52, the valve seat 46 will close the fluid passage through the valve body 44. At this stage, the pressure container is ready to be used, a user device, not shown, being connected to the valve device 52, the fluid passage through the valve body 44 being opened. The pressure in the pressure container 10 is now greater than the ambient pressure, the non-return valve 47 opening and fluid reaching the connected user device. When the pressure container has been emptied of fluid, new fluid cannot be refilled as long as the piston 882 closes the filling channel 880. Thus, the pressure container cannot be refilled.

In this embodiment, the manoeuvring of the piston 882 is carried out by an axial displacement of the piston by the valve seat pushing the piston into its arresting position. In this arresting position, an end user cannot refill the pressure container. However, it could be possible that authorized fillers using special tools can move the piston to a non-arresting position and in that connection open the filling channel so that refilling can take place.

In both embodiments, the filling channel forms the angle α with the cylinder and, in the figures shown, α=90°. Simultaneously, the angle β between the filling channel and the valve chamber 43 is also 90° in the embodiments shown. This means that the cylinder and the valve chamber are parallel to each other. These angles, α and β, may however assume other values within the scope of the invention.

The pressure container according to the two embodiments shown is provided with a safety valve 14 situated in the pressure container 10 beside the filling/user valve 12, 52.

## Claims

1. Valve device (12, 52) to prevent refilling of a pressure container (10), which valve device (12, 52) comprises a valve housing (40) having a valve chamber (43) provided with two ports (41, 42), a valve body (44) placed in the valve chamber (43) and provided with an axially movable and spring-loaded valve cone (45) having a valve seat (46), which seals against the valve body (44) when the valve cone (45) is unloaded, the valve body (44) limiting the valve chamber (43) at one port (41) thereof and that a valve inlet (49) is arranged in the valve housing (40), the valve housing (40) being provided with a filling channel (480, 880), which extends from a position between the two ports (41, 42) of the valve chamber (43) through the valve housing (40) and out through the outer surface (481, 881) thereof inside the pressure container (10) when the valve device is mounted on a pressure container, wherein an, at least initially, movable interrupt member (482, 882) is connected to the filling channel (480, 880) to close the filling channel (480, 880) after the pressure container (10) has been filled with pressure fluid, wherein the valve chamber (43) is provided with a non-return valve (47) at the other port (42) thereof, which non-return valve (47) is arranged to sealingly abut against the valve housing (40) at a positive pressure in the valve chamber (43), wherein the interrupt member (482, 882) is formed as a piston movable in a cylinder (483, 883), which cylinder forms the angle α with the filling channel (480, 880), the piston being displaceable to entirely cover the opening of the filling channel (480, 880) toward the cylinder (483, 883), filling of the pressure container (10) as well as discharge from the pressure container (10) being arranged to take place through the valve inlet (49).

2. Valve device according to claim 1, wherein the angle α is 90°.

3. Valve device according to any one of claims 1-2, wherein the cylinder (483) is situated in the valve housing (40) at a distance from the valve chamber (43).

4. Valve device according to any one of claims 1-2, wherein the valve chamber (43) at least partly is cylindrical and that said cylinder (883) is a cylindrical part of the valve chamber (43).

5. Valve device according to claim 4, wherein the piston is formed as a sleeve.

6. Valve device according to any one of claims 1-5, wherein the valve housing (40) is provided with a connection thread for the connection of a user device.

7. Valve device according to claim 6, wherein it comprises a rotationally symmetrical connection collar (131).

8. Valve device according to any one of claims 1-7, wherein the movable interrupt member (482, 882) is irreversibly movable in the cylinder (483, 883) after closure of the filling channel (480, 880).

9. Pressure container (10) comprising a pressure vessel (11), which can be filled with a gaseous fluid and which is provided with a valve device (12, 52) according to any one of claims 1-8.

10. Pressure container (10) according to claim 9, wherein the pressure container (10) comprises a safety valve (14).

11. Pressure container (10) according to claim 9, wherein the safety valve (14) is placed in the pressure vessel (11) beside the valve device (12, 52).

## Patentansprüche

1. Ventilvorrichtung (12, 52) zum Verhindern eines Wiederbefüllens eines Druckbehälters (10), wobei die Ventilvorrichtung (12, 52) ein Ventilgehäuse (40) mit einer mit zwei Durchlässen (41, 42) versehenen Ventilkammer (43), einen Ventilkörper (44), der in der Ventilkammer (43) angeordnet und mit einem axial bewegbaren und federbelasteten Ventilkegel (45) versehen ist, der einen Ventilsitz (46) aufweist, der den Ventilkörper (44) abdichtet, wenn der Ventilkegel (45) unbelastet ist, umfasst, wobei der Ventilkörper (44) die Ventilkammer (43) an einem Durchlass (41) davon begrenzt und wobei ein Ventileinlass (49) in dem Ventilgehäuse (40) angeordnet ist, wobei das Ventilgehäuse (40) mit einem Füllkanal (480, 880) versehen ist, der sich von einer Position zwischen den zwei Durchlässen (41, 42) der Ventilkammer (43) durch das Ventilgehäuse (40) und durch die Außenfläche (481, 881) davon in den Druckbehälter (10) erstreckt, wenn die Ventilvorrichtung an einem Druckbehälter angebracht ist, und wobei ein, zumindest anfänglich, bewegbares Unterbrechungselement (482, 882) an den Füllkanal (480, 880) angeschlossen ist, um den Füllkanal (480, 880) zu verschließen, nachdem der Druckbehälter (10) mit Druckfluid befüllt wurde,
wobei die Ventilkammer (43) mit einem Rückschlagventil (47) an dem anderen Durchlass (42) davon versehen ist, wobei das Rückschlagventil (47) angeordnet ist, bei einem positiven Druck in der Druckkammer (43) gegen das Ventilgehäuse (40) dichtend anzuliegen und wobei das Unterbrechungselement (482, 882) als ein in einem Zylinder (483, 883) bewegbarer Kolben ausgebildet ist, wobei der Zylinder den Winkel α mit dem Füllkanal (480, 880) ausbildet, wobei der Kolben derart verschiebbar ist, dass er die Öffnung des Füllkanals (480, 880) hin zu dem Zylinder (483, 883) vollständig verschließt, wobei ein Befüllen des Druckbehälters (10) sowie ein Auslassen aus dem Druckbehälter (10) ausgestaltet ist, durch den Ventileinlass (49) stattzufinden.

2. Ventilvorrichtung nach Anspruch 1, wobei der Winkel α 90° beträgt.

3. Ventilvorrichtung nach einem der Ansprüche 1-2, wobei sich der Zylinder (483) in dem Ventilgehäuse (40) in einem Abstand von der Ventilkammer (43) befindet.

4. Ventilvorrichtung nach einem der Ansprüche 1-2, wobei die Ventilkammer (43) zumindest teilweise zylindrisch ist und dass der Zylinder (883) ein zylindrischer Teil der Ventilkammer (43) ist.

5. Ventilvorrichtung nach Anspruch 4, wobei der Kolben als eine Hülse ausgebildet ist.

6. Ventilvorrichtung nach einem der Ansprüche 1-5, wobei das Ventilgehäuse (40) mit einem Anschlussgewinde für den Anschluss einer Benutzervorrichtung versehen ist.

7. Ventilvorrichtung nach Anspruch 6, wobei sie eine rotationssymmetrische Anschlussmanschette (131) aufweist.

8. Ventilvorrichtung nach einem der Ansprüche 1-7, wobei das bewegbare Unterbrechungselement (482, 882) nach Schließen des Füllkanals (480, 880) nicht umkehrbar in dem Zylinder (483, 883) bewegbar ist.

9. Druckbehälter (10), umfassend ein Druckgefäß (11), das mit einem gasförmigem Fluid befüllt werden kann und das mit einer Ventilvorrichtung (12, 52) nach einem der Ansprüche 1-8 versehen ist.

10. Druckbehälter (10) nach Anspruch 9, wobei der Druckbehälter (10) ein Sicherheitsventil (14) umfasst.

11. Druckbehälter (10) nach Anspruch 9, wobei das Sicherheitsventil (14) in dem Druckgefäß (11) neben der Ventilvorrichtung (12, 52) angeordnet ist.

## Revendications

1. Dispositif de soupape (12, 52) pour empêcher le remplissage d'un conteneur sous pression (10), lequel dispositif de soupape (12, 52) comprend un logement de soupape (40) ayant une chambre de soupape (43) munie de deux orifices (41, 42), un corps de soupape (44) placé dans la chambre de soupape (43) et muni d'un cône de soupape (45) axialement mobile et chargé par ressort ayant un siège de soupape (46), qui assure l'étanchéité contre le corps de soupape (44) lorsque le cône de soupape (45) est déchargé, le corps de soupape (44) limitant la chambre de soupape (43) au niveau d'un orifice (41) de celle-ci et une entrée de soupape (49) étant disposée dans le logement de soupape (40), le logement de soupape (40) étant pourvu d'un canal de remplissage (480, 880), qui s'étend d'une position située entre les deux orifices (41, 42) de la chambre de soupape (43) à travers le logement de soupape (40) et sortant par sa surface extérieure (481, 881) à l'intérieur du conteneur sous pression (10) lorsque le dispositif de soupape est monté sur un conteneur sous pression, un élément d'interruption (482, 882) mobile, au moins initialement, étant relié au canal de remplissage (480, 880) pour fermer le canal de remplissage (480, 880) après que le conteneur sous pression (10) a été rempli de fluide sous pression,
la chambre de soupape (43) étant munie d'un clapet anti-retour (47) au niveau de son autre orifice (42), lequel clapet anti-retour (47) étant conçu pour venir en butée de manière étanche contre le logement de soupape (40) à une pression positive dans la chambre de soupape (43) et l'élément d'interruption (482, 882) étant formé comme un piston mobile dans un cylindre (483, 883), lequel cylindre forme l'angle α avec le canal de remplissage (480, 880), le piston étant déplaçable pour couvrir entièrement l'ouverture du canal de remplissage (480, 880) vers le cylindre (483, 883), le remplissage du conteneur sous pression (10) ainsi que l'évacuation du conteneur sous pression (10) étant conçus pour avoir lieu à travers l'entrée de soupape (49).

2. Dispositif de soupape selon la revendication 1, l'angle α étant de 90°.

3. Dispositif de soupape selon la revendication 1 ou 2, le cylindre (483) étant situé dans le logement de soupape (40) à une distance de la chambre de soupape (43).

4. Dispositif de soupape selon la revendication 1 ou 2, la chambre de soupape (43) étant au moins partiellement cylindrique et ledit cylindre (883) étant une partie cylindrique de la chambre de soupape (43).

5. Dispositif de soupape selon la revendication 4, le piston étant formé comme un manchon.

6. Dispositif de soupape selon l'une quelconque des revendications 1 à 5, le logement de soupape (40) étant pourvu d'un filet de raccordement pour le raccordement d'un dispositif utilisateur.

7. Dispositif de soupape selon la revendication 6, comprenant un collier de raccordement (131) symétrique en rotation.

8. Dispositif de soupape selon l'une quelconque des revendications 1 à 7, l'élément d'interruption mobile (482, 882) étant irréversiblement mobile dans le cylindre (483, 883) après la fermeture du canal de remplissage (480, 880).

9. Conteneur sous pression (10) comprenant un récipient sous pression (11), qui peut être rempli d'un fluide gazeux et qui est muni d'un dispositif de soupape (12, 52) selon l'une quelconque des revendications 1 à 8.

10. Conteneur sous pression (10) selon la revendication 9, le conteneur sous pression (10) comprenant une soupape de sécurité (14).

11. Conteneur sous pression (10) selon la revendication 9, la soupape de sécurité (14) étant placée dans le récipient sous pression (11) à côté du dispositif de soupape (12, 52).
